(19) Europäisches Patentamt
European Patent Office
Office européen des brevets

(11) **EP 1 681 762 B1**

(12) **EUROPEAN PATENT SPECIFICATION**

(45) Date of publication and mention
of the grant of the patent:
**16.10.2013 Bulletin 2013/42**

(51) Int Cl.:
***H02P 21/00*** *(2006.01)*

(21) Application number: **05017058.8**

(22) Date of filing: **05.08.2005**

(54) **Synchronous motor driving system and method**

Synchronmotorantriebssystem und Verfahren

Système de contrôle de moteur synchrone et procédé

(84) Designated Contracting States:
**DE GB**

(30) Priority: **13.01.2005 JP 2005006071**

(43) Date of publication of application:
**19.07.2006 Bulletin 2006/29**

(73) Proprietor: **Hitachi, Ltd.**
**Tokyo 100-8280 (JP)**

(72) Inventors:
• **Sakamoto, Kiyoshi,**
**Hitachi. Ltd.**
**Chiyoda-ku,**
**Tokyo 100-8220 (JP)**
• **Tobari, Kazuaki,**
**Hitachi. Ltd.**
**Chiyoda-ku,**
**Tokyo 100-8220 (JP)**
• **Endo, Tsunehiro,**
**Hitachi. Ltd.**
**Chiyoda-ku,**
**Tokyo 100-8220 (JP)**

• **Iwaji, Yoshitaka,**
**Hitachi. Ltd.**
**Chiyoda-ku,**
**Tokyo 100-8220 (JP)**
• **Kawabata, Yukio,**
**Hitachi. Ltd.**
**Chiyoda-ku,**
**Tokyo 100-8220 (JP)**
• **Aoyagi, Shigehisa,**
**Hitachi. Ltd.**
**Chiyoda-ku,**
**Tokyo 100-8220 (JP)**

(74) Representative: **Beetz & Partner**
**Patentanwälte**
**Steinsdorfstrasse 10**
**80538 München (DE)**

(56) References cited:
JP-A- 7 075 398      JP-A- 2000 023 498
JP-A- 2000 324 878   JP-A- 2003 199 388
US-A- 6 066 934

**Description**

FIELD OF THE INVENTION

This invention relates to a method of controlling a synchronous motor and particularly to a synchronous motor driving system which can drive a permanent magnet synchronous motor without any rotor detecting sensor.

JP 2003 199 388 discloses a motor drive which calculates a rotor position error ($\Delta\theta$ Fig. 5 in this document) from voltage command signals, detected motor currents and motor resistance (R).

BACKGROUND OF THE INVENTION

There has been a method of controlling a synchronous motor without using sensor to detect a rotor position. This method is called a position sensor-less motor control. This method has been widely used in systems to drive synchronous motors of not only industrial machines but also consumer electronics. The performance of these synchronous motor driving systems of position sensor-less control is dependent upon the rotor-position estimating accuracy. There are some factors to reduce the accuracy. Particularly, changes in motor winding resistances due to temperature changes will have a great influence on the low speed range of the motor. Therefore, it is very important to suppress changes in motor winding resistances when the high driving performance is essential in the low-speed range (e.g. working machines and electric motor cars).

To solve the above problems, Japanese Patent Laid-open  No. 2000-324878 discloses a technique which drives a permanent magnet synchronous motor without using any rotor position sensor. This technique is characterized by filtering the voltage and current values of a motor by a band-pass filter, extracting the voltage and current of a specific harmonic component, and calculating a higher harmonic instantaneous reactive power from this detected component. Further, this technique is characterized by extracting a frequency component whose frequency is twice as high as the specific harmonic component from the obtained higher harmonic instantaneous reactive power, calculating the phase difference between the frequency component and a reference signal, and estimating the position of the rotor of the motor. Since the higher harmonic instantaneous reactive power is obtained by the vector product of a harmonic voltage and a harmonic current, it is independent upon the winding resistance of the motor. Therefore, this technique can estimate a robust estimation of rotor position independently of changes in the winding resistance due to temperatures.

Meanwhile, in the field of technology of induction motors, a speed estimation technique which will not be affected by a change in the primary resistance has been reported for a speed sensor- less vector control unit which drives an induction motor without using a speed sensor. For example, Japanese Patent Laid- open No. Hei  07 (1995)- 75398 discloses a method of accurately estimating the speed of an induction motor in a low- speed and low- frequency ranges. In other words, this technique subtracts the instantaneous reactive power estimated value of the motor from the actual instantaneous reactive power value and uses this difference to estimate the rotor speed. In this case, the actual instantaneous reactive power value is obtained by subtracting a voltage drop on the primary leak inductance from the terminal voltage of the motor and multiply this resulting estimated induced voltage value by the primary current. Further the instantaneous reactive power estimated value is calculated from the estimated rotor speed value, the exciting current, and the primary current. This technique corrects the estimated rotor speed value to minimize the difference between the actual and instantaneous reactive power estimated values. As the result, the estimated speed value finally converges to a preset value. With this, an accurate estimated rotor speed value can be obtained. Since the estimated speed value is obtained by the vector product of a voltage and a current, it is independent upon the primary resistance. Consequently, this technique can suppress the influence by the change in the primary resistance on the rotor speed and accomplish the speed sensor- less vector control of the induction motor which assures the  accuracy of calculation in the low- speed and low- frequency ranges.

Additionally, Japanese Patent Laid- open No. 2000- 23498 discloses a position sensor- less vector control which calculates a difference between a measured current of a permanent magnet synchronous motor and a current of a motor model and uses this difference to add a correction term for correcting a position error to the rotor speed of the motor model. Here, the position error means the angle difference between the presumed magnetic pole position of the rotor and the actual magnetic pole position.

Besides, JP 2003199388 discloses a motor driver which performs torque control of a motor while estimating the rotor position accurately even when the load torque varies periodically. The motor driver can estimate a rotor position error from the voltage command values and the current detection values.

The position sensor-less control technology for a permanent magnet synchronous motor (disclosed by the first Patent Document) obtains the instantaneous reactive power value from particular harmonic components which are contained in the voltage and current of the motor. Methods below are disclosed as examples of using the particular harmonic components. (1) A method of using components of the voltage and current on which a signal of a specific frequency is superimposed (2) A method of detecting harmonic components which are output from a power converter and PWM-controlled Method (1) has a problem that the superimposed signals cause the motor to generate noises. To superimpose on a voltage signal, the maximum of the fundamental wave of the Output voltage must be made lower by the amplitude of a harmonic wave to be superimposed. This narrows the output voltage range of the power converter. In method (2), the magnitude of a harmonic component due to PWM control is dependent upon frequencies and modulation rates. Therefore it seems to be difficult to accomplish uniform performances under various running conditions of the motor.

Meanwhile, the speed sensor- less vector control technique (disclosed by the second Patent Document) obtains instantaneous reactive power values of fundamental wave components of the voltage and current of the motor. Therefore, this method does not have the problem that method (1) has. However, since the method of the second Patent Document does not contain a method of estimating the rotor position although it controls an induction motor, this method cannot be used for position sensor- less control of a permanent magnet synchronous motor which always requires accurate estimation of rotor positions.

Further, the technique of the third Patent Document calculates a difference between a measured current of a synchronous motor and a current of a motor model and uses this difference to add a correction term for correcting a position error to the rotor speed of the motor model. However, this technique also uses a winding resistance parameter of the motor. Therefore, when the winding resistance of the motor changes by heat, an error will generate in the current that is estimated by the model. Namely, this technology cannot accomplish high- accuracy control which is not affected by a temperature change.

SUMMARY OF THE INVENTION

An object of the invention is to provide a system for driving a permanent magnet synchronous motor which can accomplish high-accuracy position sensor-less control without being affected by a change in the winding resistance of the motor.

Another object of the invention is to provide a position sensor-less control system for driving a permanent magnet synchronous motor which can estimate rotor speeds and positions from fundamental wave components of the voltage and current of the motor independently of the winding resistance of the motor.

The above objects are accomplished by the features of Independent claims of the present application.

We inventors have found that it is possible to obtain a function value of position error $\Delta\theta$ for vector control of a synchronous motor without using the winding resistance of the motor.

The present invention, in one aspect thereof, is characterized in that a synchronous motor driving system comprises a first calculating means for calculating an arbitrary first value from an input signal that is obtained from a control system including a 3-phase A.C. voltage command calculating means by a vector control system and an output signal that is obtained from a result of power-feeding from the power converter to the motor, a second calculating means for calculating an arbitrary second value on the base of a different combination of said input signal and said output signal, and a frequency control means for calculating a position error function value which is a function of position error $\Delta\theta$ of said synchronous motor from said first and second values without a winding resistance of the synchronous motor and controlling said output angular frequency $\omega1$ to minimize this position error function value.

By way of example, an instantaneous reactive power estimated value Qhat is calculated using a converter output angular frequency $\omega1$, a detected motor current value, an inductance parameter which is a motor constant, and an induced voltage constant $K_E$. Then, a difference $\Delta Q$ is calculated between this instantaneous reactive power estimated value Qhat and an instantaneous reactive power value Q which is obtained from the voltage and current of the motor. This difference $\Delta Q$ is a function having proportional and differential terms of a position error $\Delta\theta$. Therefore, it is possible to accomplish a high-accuracy sensor-less vector control of a synchronous motor independently of temperature changes by controlling the output angular frequency $\omega1$ to minimize this difference $\Delta Q$ since the winding resistance of the motor is not used for calculation.

Accordingly, a preferred embodiment of this invention comprises a reactive power detecting means which calculates a instantaneous reactive power detected value Q from input values of 2- axis voltage commands (Vdc* and Vqc*) and current detected values (Idc and Iqc) and an instantaneous reactive power estimating means which calculates an instantaneous reactive power estimated value Qhat from inputs of output angular frequency $\omega1$ and current detected values (Idc and Iqc), wherein said output angular frequency $\omega1$ is controlled to minimize the difference $\Delta Q$ between the instantaneous reactive power estimated value Qhat and the instantaneous reactive power detected value Q.

We inventors have also found that the calculated difference $\Delta Q$ contains a difference between the rotational frequency and the output angular frequency of the motor and the position error $\Delta\theta$ between a virtual rotor coordinates assumed by the control system and the actual rotor coordinates when the instantaneous reactive power estimated value Qhat contains a product of three dc axis components (induced voltage constant parameter, angular frequency, and detected current) of the motor.

Accordingly, the operational expression of the instantaneous reactive power estimated value Qhat in the preferred embodiment of this invention contains the above product of three components.

Further, we have found that, when the running condition changes and consequently the current polarity is reversed, the speed error component in the difference ΔQ and the polarity of the position error Δθ are also affected and changed.

Accordingly, the preferred embodiment of this invention determines the polarity of the exciting current command Id* by the polarity of the torque current command Iq* and reverses the polarity of the difference ΔQ and the change direction of the output angular frequency by the polarity of the dc axis current Idc.

The preferred embodiment of the invention can accomplish a high-accuracy position sensor-less control for a permanent magnet synchronous motor whose operation will not be affected by the change in the winding resistance of the motor and consequently hard to be affected by a temperature change.

Other objects and features of the invention will be apparent from the following description of embodiments.

BRIEF DESCRIPTION OF THE DRAWINGS

Fig. 1 shows the simplified control block diagram of the entire position sensor-less driving system for a permanent magnet synchronous motor which is an embodiment of this invention.

Fig. 2 shows two rotating coordinates system (d-q and dc-qc coordinates) to explain definitions of a phase from the stator winding axis and a position error (Δθ).

Fig. 3 shows a phase relationship of two rotating coordinates whose position error (Δθ) is positive.

Fig. 4 shows a phase relationship of two rotating coordinates whose position error (Δθ) is negative.

DESCRIPTION OF THE PREFERRED EMBODIMENTS

Embodiments of the invention will be described in further detail with reference to the accompanying drawings.

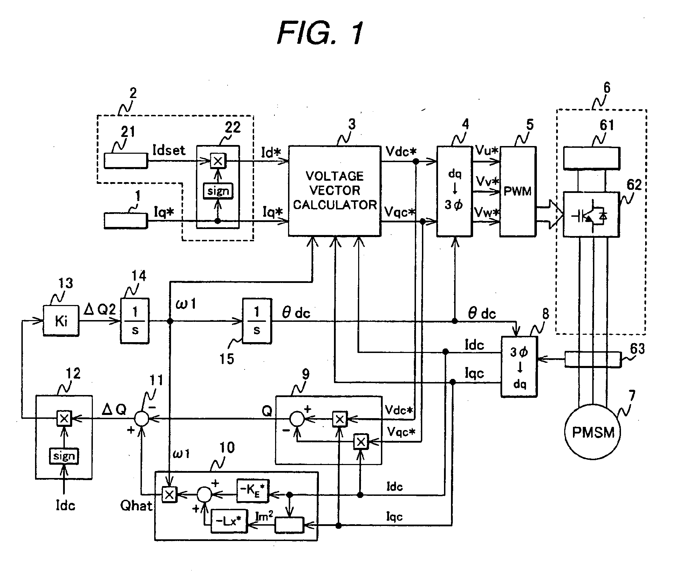

Fig. 1 shows the functional block diagram of a synchronous motor driving system which is an embodiment of this invention. In Fig. 1, the torque current command Iq* of the motor is output from torque current command generator 1. The exciting current command Id* of the motor is output from exciting current command generator 2. Inside the exciting current command generator (2), the magnitude (Idset) of the exciting current is determined by an exciting current amplitude setter (21) and the polarity of the exciting current (Idset) is determined by a polarity setter (22). With these, exciting current command Id* is produced. The polarity setter (22) uses the polarity of Iq* to set the polarity of Id*. Voltage commands Vdc* and Vqc* are calculated by a voltage vector calculator (3). The voltage commands Vdc* and Vqc* are voltage vector components on the dc-qc coordinates wherein the dc axis assumes the axis of the flux of the permanent magnet rotor and the qc-axis orthogonally intersects with the dc axis. The voltage commands Vdc* and Vqc* are converted into voltage command values (Vu*, Vv* and Vw*) on the 3-phase A.C. axes by a coordinate converter (4). The voltage command values (Vu*, Vv* and Vw*) on the 3-phase A.C. axes converted into PWM (pulse width modulated) pulses by a PWM controller (5). The PWM pulses are used to drive the power converter (6). Synchronous motor 7 to be controlled is driven by the power converter (6). The power converter (6) consists of d.c. power supply section 61, main circuit section 62 made of switching elements, and current detecting section 63 for detecting motor currents. The 3-phase motor currents detected by the current detecting section 63 are converted to detection currents Idc and Iqc on the dc-qc coordinates by a coordinate converter 8. The instantaneous reactive power Q is calculated from the applied voltage commands (Vdc* and Vqc*) and the detected currents (Idc and Iqc) by instantaneous reactive power calculator 9. The instantaneous reactive power estimated value Qhat is calculated from the detected currents (Idc and Iqc) and the output angular frequency ω1 by instantaneous reactive power estimating means 10. The difference ΔQ between Q and Qhat is calculated by calculator 11. Sign setter 12 sets (or reverses) the sign of the difference ΔQ by conditions and outputs the signed difference.

Amplifier 13 multiplies the output of the sign setter 12 by positive gain Ki. Integrator 14 outputs output angular frequency ω1 according to the magnitude of the output (ΔQ2) of the amplifier (13). Phase angle integrator 15 integrates the output angular frequency (ω1) and outputs phase angle θdc of the dc axis relative to the U-phase winding axis of the stator. The phase angle θdc is used for conversion of coordinates by coordinate converters 4 and 8.

Next will be explained the principle of control operation of this embodiment.

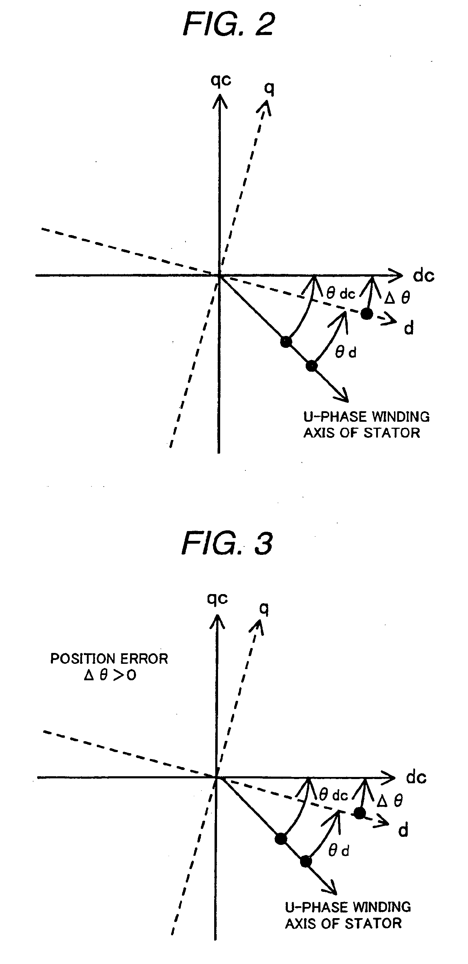

Fig. 2 shows a rotating coordinates system for controlling of this embodiment. The d-q coordinates system is a rotating coordinates system in synchronism with the rotation of the rotor. On the d-q coordinates system, the d axis is along the flux of the permanent magnet rotor and the q axis advances by 90 degrees from the d axis. Angular frequency ωr of the rotor is related to the phase angle θd relative to the U-phase winding axis of the stator by Expression (1).

$$\omega_r = \frac{d}{dt}\theta_d \qquad \cdots\cdots\cdots\cdots\cdots\cdots\cdots\cdots (1)$$

In a motor driving system equipped with a position sensor, since the phase angle θd of the d axis is obtained from the rotor position information sent from the sensor, the control operation to drive the motor can be singly executed on the d-q coordinates.

However, since this embodiment uses a poison sensor- less control system, the phase angle θd of the actual d axis cannot be obtained. Therefore, this embodiment uses a method of assuming a dc- qc coordinate system on the original d- q coordinate system and implementing control operations on the virtual dc- qc coordinate system. The dc- qc coordinate system is a rotating coordinate system which rotates at an output angular frequency ω1 of the A.C. voltage output from the power converter (6) . The phase angle θdc of the dc axis is related to the output angular frequency ω1 by Equation (2) .

$$\omega_1 = \frac{d}{dt}\theta_{dc} \qquad \cdots\cdots\cdots\cdots\cdots\cdots\cdots (2)$$

The dc-qc coordinates are virtual axes which are assumed in the controller and there is a phase difference $\Delta\theta$ between the dc-qc and d-q coordinates systems. In this specification, this phase difference $\Delta\theta$ is called a position error.

Fig. 2 shows the relationship between the dc-qc and d-q coordinates systems and the position error $\Delta\theta$. The position error $\Delta\theta$ is defined by Equation (3).

$$\Delta\theta = \theta_{dc} - \theta_d \cdots\cdots\cdots\cdots\cdots\cdots\cdots\cdots (3)$$

Vector quantities are converted between the dc-qc and d-q coordinates systems by Expression (4) using the position error $\Delta\theta$. In the expressions below, voltage vectors are Vd, Vq, Vdc, and Vqc. Current vectors are Id, Iq, Idc, and Iqc.

$$\left.\begin{array}{l}\begin{bmatrix}V_d\\V_q\end{bmatrix}=\begin{bmatrix}\cos\Delta\theta & -\sin\Delta\theta\\ \sin\Delta\theta & \cos\Delta\theta\end{bmatrix}\begin{bmatrix}V_{dc}\\V_{qc}\end{bmatrix}\\[2ex]\begin{bmatrix}V_{dc}\\V_{qc}\end{bmatrix}=\begin{bmatrix}\cos\Delta\theta & \sin\Delta\theta\\ -\sin\Delta\theta & \cos\Delta\theta\end{bmatrix}\begin{bmatrix}V_d\\V_q\end{bmatrix}\\[2ex]\begin{bmatrix}I_d\\I_q\end{bmatrix}=\begin{bmatrix}\cos\Delta\theta & -\sin\Delta\theta\\ \sin\Delta\theta & \cos\Delta\theta\end{bmatrix}\begin{bmatrix}I_{dc}\\I_{qc}\end{bmatrix}\\[2ex]\begin{bmatrix}I_{dc}\\I_{qc}\end{bmatrix}=\begin{bmatrix}\cos\Delta\theta & \sin\Delta\theta\\ -\sin\Delta\theta & \cos\Delta\theta\end{bmatrix}\begin{bmatrix}I_d\\I_q\end{bmatrix}\end{array}\right\} \cdots\cdots\cdots (4)$$

As seen from Equations (1), (2), and (5) (to be explained later), the differentiation of the position error $\Delta\theta$ is equal to the difference between two angular frequencies ω1 and ω r.

$$\frac{d\Delta\theta}{dt} = \frac{d\theta_{dc}}{dt} - \frac{d\theta_d}{dt} = \omega_1 - \omega_r \qquad \cdots\cdots\cdots(5)$$

The position sensor-less control of a permanent magnet synchronous motor can be accomplished by assembling the control system so that the output angular frequency $\omega 1$ may be equal to the rotational angular frequency $\omega r$ of the rotor and the position error $\Delta\theta$ may be always about 0.

Next will be explained a voltage operation system. The voltage vector calculator (3) calculates voltage commands to be applied to the motor (7) as vector quantities Vdc* and Vqc* on the dc-qc coordinates system. There are some well-known calculation methods for the above calculation and any of them can be used. For example, a configuration which is disclosed by Japanese Application Patent Laid-open Publication No. 2004-289959 can be used directly. An equation for calculating the voltage vectors of the motor is given below as an example.

$$\begin{bmatrix} V_{dc}^{**} \\ V_{qc}^{**} \end{bmatrix} = R^* \cdot \begin{bmatrix} I_{dc}^* \\ I_{qc}^* \end{bmatrix} + \omega_1 \begin{bmatrix} -L_q^* \cdot I_{qc}^* \\ L_d^* \cdot I_{dc}^* \end{bmatrix} + \begin{bmatrix} 0 \\ K_E^* \cdot \omega_1 \end{bmatrix} \qquad \cdots\cdots(6)$$

Equation (6) is derived from Equation (7) which is a voltage equation of the permanent magnet synchronous motor in the d-q coordinates system by ignoring the differential term, substituting the motor angular frequency $\omega r$ by the output angular frequency $\omega 1$, and changing the motor constant to a constant parameter.

$$\begin{bmatrix} V_d \\ V_q \end{bmatrix} = R \cdot \begin{bmatrix} I_d \\ I_q \end{bmatrix} + p \begin{bmatrix} L_d I_d \\ L_q I_q \end{bmatrix} + \omega_r \begin{bmatrix} -L_q \cdot I_q \\ L_d \cdot I_d \end{bmatrix} + \begin{bmatrix} 0 \\ K_E \omega_r \end{bmatrix} \qquad \cdots\cdots(7)$$

Here, "p" represents a differential operator.

The voltage vector calculator (3) calculates the current errors of the dc axis and the qc-axis. Voltage compensation values $\Delta$Vdc* and $\Delta$Vqc* are respectively calculated to minimize the current difference between dc and qc-axis. The voltage command Vdc* to be finally output is the sum of Vdc** and $\Delta$Vdc*. Similarly on the qc-axis, the voltage command Vqc* to be output is the sum of Vqc** and $\Delta$Vqc*.

Next will be explained the principle of the position sensor-less control operation using the instantaneous reactive power which is the future of this embodiment.

The instantaneous reactive power (Q) is calculated by the instantaneous reactive power calculator (9). This embodiment calculates the instantaneous reactive power (Q) by Equation (8) using voltage commands (Vdc* and Vqc*) and current (Idc and Iqc) on the dc-qc coordinates system.

$$Q = V_{dc}*I_{qc} - V_{qc}*I_{dc} \cdots\cdots\cdots\cdots\cdots\cdots\cdots\cdots(8)$$

Although Equation (8) uses voltage commands Vdc* and Vqc* on the dc-qc coordinates system, it can use motor voltages Vdc and Vqc. In this case, Vdc and Vqc values can be obtained by detecting motor voltages Vu, Vv, and Vw and converting them on the dc-qc coordinates. Equation (9) uses motor voltages Vdc and Vqc.

$$Q = V_{dc}I_{qc} - V_{qc}I_{dc} \cdots\cdots\cdots\cdots\cdots\cdots\cdots\cdots\cdots(9)$$

When a synchronous motor is driven by a power converter such as an inverter, the motor voltage has a PWM waveform. Therefore, it is easier to handle Equation (8) using voltage command values.

As seen from Equations (8) and (9), the instantaneous reactive power value Q can be calculated without information of angular frequency ($\omega r$ or $\omega 1$). Therefore, the instantaneous reactive power value Q is used as a reference model for frequency adjustment.

In this embodiment, the instantaneous reactive power estimated value Qhat is the resulting instantaneous reactive power value calculated by another method (different from Equations (8) and (9)) using an angular frequency ω1 value. Qhat is used as a control model. This embodiment calculates the difference ΔQ between the instantaneous reactive power Q of the reference model and the instantaneous reactive power estimated value Qhat of the control model and correct the angular frequency ω1 by the difference. When the angular frequency ω1 is corrected, the result is fed back to the control model and this ω1 correction is continued until the difference between Q and Qhat values reaches 0.

To accomplish the position sensor-less control of the permanent magnet synchronous motor by the above process, it is necessary to feed back the result to the control model and repeat the correction process until the output angular frequency ω1 equals to the rotational angular frequency ωr of the rotor and the position error Δθ always converges to 0 or the vicinity. For that purpose, this embodiment clarifies the components in the instantaneous reactive power Q and the equation of the instantaneous reactive power estimated value Qhat. Further this embodiment establishes a method for changing the output angular frequency ω1 according to the characteristic of the difference ΔQ between the instantaneous reactive power value Q and the instantaneous reactive power estimated value Qhat of the control model.

Next will be explained a process of driving the equation of the instantaneous reactive power estimated value Qhat which is a control model. First, the components in the instantaneous reactive power Q are clarified.

As shown in Equations (8) and (9), the equation of the instantaneous reactive power Q is the vector product of a voltage and a current. Therefore, the Q value obtained by Equation (10) using vector values on the d-q coordinates system is the same as the Q values obtained by Equations (8) and (9).

$$Q = V_d I_q - V_q I_d \dots\dots\dots\dots\dots\dots\dots (10)$$

By substituting a voltage equation (7) on the d-q coordinates system for equation (10), it is apparent that the instantaneous reactive power Q is expressed by Equation (11).

$$Q = (pL_d I_d) I_q - (pL_q I_q) I_d - \omega_r (L_d \cdot I_d{}^2 + L_q \cdot I_q{}^2)$$

$$- K_E \omega_r I_d \dots\dots\dots\dots\dots\dots\dots\dots (11)$$

The first and second terms in the right side of Equation (11) can be deformed into Equation (12) by Equation (4).

$$\begin{aligned}
(pL_d I_d) I_q &= L_d I_q \cdot p\left(I_{dc} \cos\Delta\theta - I_{qc} \sin\Delta\theta\right) \\
&= L_d I_q \cdot \left(\frac{dI_{dc}}{dt}\cos\Delta\theta - I_{dc}\frac{d\Delta\theta}{dt}\sin\Delta\theta - \frac{dI_{qc}}{dt}\sin\Delta\theta - I_{qc}\frac{d\Delta\theta}{dt}\cos\Delta\theta\right) \\
&\fallingdotseq L_d I_q \cdot \left(-I_{dc}\sin\Delta\theta - I_{qc}\cos\Delta\theta\right)\frac{d\Delta\theta}{dt} \\
&= -L_d I_q{}^2 \cdot \frac{d\Delta\theta}{dt} \\
(pL_q I_q) I_d &= L_q I_d \cdot p\left(I_{dc}\sin\Delta\theta + I_{qc}\cos\Delta\theta\right) \\
&= L_q I_d \cdot \left(\frac{dI_{dc}}{dt}\sin\Delta\theta + I_{dc}\frac{d\Delta\theta}{dt}\cos\Delta\theta + \frac{dI_{qc}}{dt}\cos\Delta\theta - I_{qc}\frac{d\Delta\theta}{dt}\sin\Delta\theta\right) \\
&\fallingdotseq L_q I_d \cdot \left(I_{dc}\frac{d\Delta\theta}{dt}\cos\Delta\theta - I_{qc}\frac{d\Delta\theta}{dt}\sin\Delta\theta\right) \\
&= L_q I_d{}^2 \cdot \frac{d\Delta\theta}{dt} \qquad\qquad\qquad \cdots(12)
\end{aligned}$$

In Equation (12), time differential terms of currents Idc and Iqc on the dc-qc coordinates system are ignored in process of transformation. This is because components of the differential terms are averaged by the integrator 14 and becomes ignorable when Q is used for controlling. Equation (11) can be transformed into Equation (13) by the result of Equation (12).

$$Q \doteq -\omega_r \left( L_d \cdot I_d^{\ 2} + L_q \cdot I_q^{\ 2} \right) - K_E \omega_r I_d + \left( -L_d I_q^{\ 2} - L_q I_d^{\ 2} \right) \cdot \frac{d\Delta\theta}{dt}$$

$$\cdots (13)$$

Equation (14) is obtained by substituting angular frequency $\omega$r for time differential terms $\omega$1 and $\Delta\theta$ in Equation (5).

$$Q \doteq -\omega_1 \left( L_d \cdot I_d^{\ 2} + L_q \cdot I_q^{\ 2} \right) - K_E \omega_r I_d + \frac{d\Delta\theta}{dt} \left( L_d - L_q \right) \left( I_d^{\ 2} - I_q^{\ 2} \right)$$

$$\cdots (14)$$

Equation (14) clarifies the details of components in the instantaneous reactive power Q. The first term in the right side is a reactive power component which generates on the inductance of the motor wiring. The second term in the right side is a component of the product of Id and a voltage induced by motor rotation. The third term in the right side is a component which generates when a position error $\Delta\theta$ between the d-q and dc-qc coordinates systems changes.

As for a non-salient pole motor, Ld is equal to Lq. By substituting Ld and Lq for L (where L is the inductance of the non-salient pole motor), Equation (14) can be simplified as shown Equation (15).

$$Q \approx -\omega_1 L (I_d^{\ 2} + I_q^{\ 2}) - K_E \omega_r I_d \ldots\ldots\ldots\ldots\ldots (15)$$

This embodiment employed Equation (16) as an expression to calculate the instantaneous reactive power estimated value Qhat from Equations (14) and (15). Equation (16) is used by the instantaneous reactive power estimating means (10).

$$Q_{hat} = -\omega_1 L_x * I_m^{\ 2} - K_E * \omega_1 \cdot I_{dc} \ldots\ldots\ldots\ldots (16)$$

"Im" in Equation (16) denotes the magnitude of the motor current. Equation (17) shows the relationship of Im, Id, Iq, Idc, and Iqc.

$$I_m^{\ 2} = I_d^{\ 2} + I_q^{\ 2} = I_{dc}^{\ 2} + I_{qc}^{\ 2} \ldots\ldots\ldots\ldots\ldots (17)$$

The most significant term in Equation (16) is the second term in the right side. It is a reactive power component ($K_E$* by $\omega$1 by Idc) of an induced voltage. As the details will be described before Equation (21), this second term derives information about position error $\Delta\theta$ and a difference between angular frequencies $\omega$ 1 and $\omega$r which are required to accomplish the position sensor-less control.

Meanwhile, the first term (related to an inductance) in the right side of Equation (16) cannot be correctly calculated by the position sensor-less control system. This is because the position sensor-less control system cannot get current values (Id and Iq) on the d-q coordinates system. Therefore, inductance parameter Lx* of Equation (16) should be set so that the estimated difference of the reactive power term (due to inductance) may be small according to applications. For example, Lx* is equal to L for a non-salient pole motor. However, for a salient pole motor, Lx* can be freely set (e.g. Lx* = Ld, Lx* = Lq, or Lx* = an intermediate value between Ld and Lq).

Calculator 11 calculates difference ΔQ between instantaneous reactive power Q and instantaneous reactive power estimated value Qhat. For ease of explanation, the non-salient pole motor is assumed here to calculate the component of difference ΔQ. Difference ΔQ is expressed by Equation (18) which is the difference between Equations (16) and (15).

$$\Delta Q = Q_{hat} - Q = -\omega_1 L_x * Im^2 - K_E * \omega_1 \cdot I_{dc}$$
$$- \{-\omega_1 L \cdot Im^2 - K_E \omega_r \cdot I_d\} \quad \dots \dots \dots \dots (18)$$

Here it is assumed that the motor constant parameter of the control system is equal to the actual motor constant, that is, Lx* = L and $K_E$* = $K_E$. Using Equation (5), angular frequency ωr is substituted for ω1 and time differential of Δθ. With this, Equation (18) is transformed into Equation (19).

$$\Delta Q = Q_{hat} - Q \fallingdotseq -K_E \omega_1 \cdot I_{dc} + K_E \omega_r I_d$$
$$\fallingdotseq K_E \omega_1 (I_d - I_{dc}) - K_E \frac{d\Delta\theta}{dt} I_d \quad \dots \dots \dots (19)$$

Since Id = Idc · cosΔθ - Iqc · sinΔθ in Equation (4), Equation (19) can be transformed into Equation (20).

$$\Delta Q \fallingdotseq K_E \omega_1 (I_{dc} \cos \Delta\theta - I_{dc} - I_{qc} \sin \Delta\theta) - K_E \frac{d\Delta\theta}{dt} I_d \quad \dots (20)$$

When position error Δθ is assumed to be approximately 0, cosΔθ is approx. 1 and sinΔθ is approx. Δθ . Accordingly, Equation (20) is approx. Equation (21).

$$\Delta Q \fallingdotseq -K_E \omega_1 I_{qc} \Delta\theta - K_E I_d \frac{d\Delta\theta}{dt} \quad \dots \dots \dots \dots (21)$$

In Equation (16), instantaneous reactive power estimated value Qhat contains a reactive power component ($K_E$* by ω1 by Idc). Therefore, it is recognized that difference ΔQ between Q and Qhat contains a term of position error Δθ and a component of its time differential. Δθ time differential (dΔθ/dt) is a speed difference of angular frequencies (ω1 and ωr) as shown in Equation (5). Therefore, it is recognized that Δθ contains two quantities required for position sensorless control of the permanent magnet synchronous motor: (1) speed difference between output angular frequency ω1 and rotational angular frequency ωr of the rotor and (2) value of position error Δθ.

Below will be explained a method of using the ΔQ value to control output angular frequency ω1.

As seen from Equation (21), the polar relationship of ΔQ and Δθ is dependent upon the polarity of Iqc (qc-axis current). Similarly, the polar relationship of ΔQ and dΔθ/dt is dependent upon the polarity of Id (d-axis current). To eliminate these polar dependences, this embodiment provides a polarity setter (22) to determine the polarity of Id* (exciting current command) and a sign setter (12) to determine the sign of ΔQ (difference). With these, the polarity of current is determined according to the running conditions. The operations of these setters will be explained below respectively in case the polarity of Iq* (torque current command) is positive and in case the polarity of Iq* (torque current command) is negative. Here, angular frequencies ω1 and ωr are assumed to be positive.

(1) When Iq* (torque current command) ≥ 0

The polarity setter (22) makes the polarity of Id* (exciting current command) positive. Id* is equal to Idset. A compensator in the voltage vector calculator (3) works to make Idc and Iqc (dc- and qc-axis currents) equal to their command values Id* and Iq*. Therefore, if Id* > 0 and Iq* ≥ 0, Idc > 0 and Iqc ≥ 0. If Δθ (position error) is approx. 0, the polarity of Id (d-axis current) is positive (Id > 0) as in the case of Idc. Therefore, the polarities of coefficients of terms in Equation (21) (approximate expression of ΔQ) are given as shown in Equation (22).

$$-K_E\omega_1 I_{qc} \leq 0, \quad -K_E I_d < 0 \quad \dots\dots\dots\dots\dots\dots\dots (22)$$

When the polarity of Idc (dc-axis current) is positive, the ΔQ sign setter (12) directly outputs the input (ΔQ) without changing its polarity. The amplifier (13) multiplies the output of the ΔQ sign setter (12) by a positive gain (Ki) and outputs ΔQ2. The final polarity of ΔQ2 is opposite the polarity of Δθ . Similarly, the polarity of ΔQ2 is opposite the polarity of dΔθ/dt.

(2) When Iq* (torque current command) < 0

The polarity setter (22) makes the polarity of Id* (exciting current command) negative. Id* is equal to - Idset. A compensator in the voltage vector calculator (3) works to make Idc and Iqc negative (< 0) if Id* and Iq* are negative (< 0). If Δθ (position error) is approx. 0, the polarity of Id (d-axis current) is negative (Id < 0) as in the case of Idc. Therefore, the polarities of coefficients of terms in Equation (21) (approximate expression of ΔQ) are given as shown in Equation (23).

$$-K_E\omega_1 I_{qc} > 0, \quad -K_E I_d > 0 \quad \dots\dots\dots\dots\dots\dots\dots (23)$$

As the polarity of Idc (dc-axis current) is negative, the ΔQ sign setter (12) reverses the polarity of the input (ΔQ) and outputs it. The amplifier (13) multiplies the output of the ΔQ sign setter (12) by a positive gain (Ki) and outputs ΔQ2. As the polarities of Equation (23) are opposite those of Equation (22), the polarity of the final output (ΔQ2) is opposite the polarity of Δθ. Similarly, the polarity of ΔQ2 is opposite the polarity of dΔθ/dt.

In summary, the polarity setter (22) and the sign setter (12) work to make the polar relationship constant between ΔQ2 (output of the amplifier (13)) and Δθ (position error) or dΔθ/dt. In other words, the polarity of ΔQ2 is always opposite to that of Δθ. Similarly, the polarity of ΔQ2 is always opposite to that of dΔθ/dt.

Further, the sign setter (12) judges whether to reverse the sign of the input (ΔQ) according to the polarity of Idc (dc- axis current) . Idc (dc- axis current) is used for judgment because there is a time lag between the change of Id* polarity by the polarity setter 22 and the actual Idc polarity change.

The position sensor-less control of a permanent magnet synchronous motor is possible by integrating the ΔQ2 value and outputting angular frequency ω1. Four cases of this operation will be separately explained below.

Fig. 3 shows a phase relationship of two rotating coordinates whose position error Δθ is positive.

(1) When the position error Δθ is positive, two coordinates (dc-qc and d-q) are positioned as shown in Fig. 3. In this case, the dc-qc coordinates have its phase advanced. As the ΔQ2 value is negative when Δθ is positive, the integrator (14) decrements the ω1 value (output angular frequency). This reduces the θdc increasing rate and makes the Δθ value smaller.

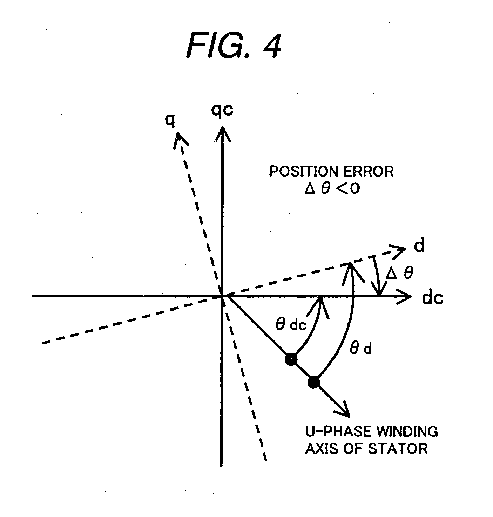

Fig. 4 shows a phase relationship of two rotating coordinates whose position error Δθ is negative.

(2) When the position error Δθ is negative, two coordinates (dc-qc and d-q) are positioned as shown in Fig. 4. In this case, the dc-qc coordinates have its phase delayed. As the ΔQ2 value is positive when Δθ is negative, the integrator (14) increments the ω1 value (output angular frequency). This increases the θdc increasing rate and makes the Δθ value smaller.

(3) When the dΔθ/dt value is positive, ω1 is greater than ωr (from Equation (5)). In this case, as the ΔQ2 value becomes negative, the integrator (14) decreases the ω1 value. This makes the ω1 - ωr difference smaller.

(4) When the dΔθ/dt value is negative, ω1 is smaller than ωr (from Equation (5)). In this case, as the ΔQ2 value becomes positive, the integrator (14) increases the ω1 value. This makes the ω1 - ωr difference smaller.

The above description assumes a permanent magnet synchronous motor of 2 poles (1 pole pair). This is because the mechanical angular frequency of the 2-pole motor is equal to the angular frequency of alternating current applied to the motor in the synchronous status and, as the result, simpler equations can be used. When the number of poles is P, ωr (angular frequency) is related to ωm (mechanical rotational angular frequency of the rotor) by ωr = ωm · P/2 (where P is an even number of 4 or more). This relationship enables application of this invention to synchronous motors of more pole pairs.

According to the invention, actual instantaneous reactive power value Q is calculated from a voltage applied to a synchronous motor and a current detected value. Instantaneous reactive power estimated value Qhat is calculated from inverter output angular frequency ω1 and a current detected value. Inverter output angular frequency ω1 is controlled to minimize the difference (ΔQ) between Q and Qhat. This difference (ΔQ) contains a component proportional to position

error $\Delta\theta$ of the synchronous motor and a component proportional to its rate of change (d$\Delta\theta$/dt) independently of winding resistances. A frequency control system is provided to minimize this difference down to zero. This frequency control system has accomplished a high-accuracy sensor-less control.

The instantaneous reactive power can be substituted by any value which contains a position error ($\Delta\theta$) function and can be calculated without using winding resistances.

### Claims

1. A synchronous motor driving system comprising:_

   a synchronous motor (7), a power converter (6) for supplying an arbitrary alternating current to this motor (7), a voltage command calculating means (3) for vector-operating voltage commands (Vdc*, Vqc*) from given current commands (Id*, Iq*) and current detected values (Idc, Iq), a frequency calculating means (14) for calculating output angular frequency ($\omega$1) of an alternating current to be output by said power converter (6), a means (15) for calculating an estimated polar phase ($\theta$dc) from said output angular frequency ($\omega$1), a 3-phase A.C. voltage command calculating means (4) for calculating 3-phase voltage commands (Vu*, Vv*, Vw*) to be output by said power converter (6) from this estimated polar phase ($\theta$dc) and said voltage commands (Vdc*, Vqc*), and a PWM control means (5) for PWM-controlling said power converter (6) by these 3-phase A.C. voltage commands (Vu*, Vv*, Vw*),
   wherein said synchronous motor driving system further comprises:

   a first calculating means (9) for calculating an arbitrary first value (Q) from an input signal (Vdc*, Vqc*) that is obtained from a control system including said 3-phase A.C. voltage command calculating means (4) and an output signal (Idc, Iqc) that is obtained from a result of power-feeding from said power converter (6) to said motor (7),
   a second calculating means (10) for calculating an arbitrary second value (Qhat) from said output angular frequency ($\omega$1) and said output signal, and
   a frequency control means (11, 12, 13) for calculating a position error function value ($\Delta$Q2) which is a function of position error ($\Delta\theta$) of said synchronous motor (7) from said first (Q) and second (Qhat) values without a winding resistance of the synchronous motor (7) and controlling said output angular frequency ($\omega$1) to minimize this position error function value ($\Delta$Q2).

2. The system of claim 1, wherein said input signal contains a signal equivalent to said voltage commands or said output angular frequency ($\omega$1), and said output signal contains a signal equivalent to said current detected values.

3. The system of claim 1, wherein said first and/or second calculating means contain a means for calculating a 3-value product of $K_E$ by $\omega$1 by Idc where $\omega$1 is the output angular frequency, $K_E$ is a control parameter of the induced voltage constant of said motor, and Idc is the dc position error of the current detected value.

4. The system of claim 1, wherein said first and second values respectively represent the detected value (Q) and the estimated value (Qhat) of the instantaneous reactive power.

5. The system of claim 1, wherein said position error function contains proportional and differential terms of position error ($\Delta\theta$).

6. The system of claim 1, further comprising means for reversing the polarity of said position error function value and the direction of increasing and/or decreasing of said output angular frequency according to the polarity of the dc axis current.

7. The system of claim 1, wherein the first calculating means represents a reactive power detecting means (9) for detecting instantaneous reactive power detected value (Q) by inputting said voltage commands and current detected values,
   the second calculating means represents an instantaneous reactive power estimating means (10) for estimating instantaneous reactive power estimated value (Qhat) by inputting said output angular frequency ($\omega$1) and said current detected values, and
   the frequency control means (11-13) is adapted to controlling said output angular frequency ($\omega$1) to minimize the difference between the instantaneous reactive power estimated value (Qhat) and the instantaneous reactive power detected value (Q).

8. The system of claim 7, further comprising means for setting an exciting current command to a positive preset value when said motor is power-running by a positive torque current command and setting an exciting current command to a negative preset value when said motor is regenerating by a negative torque current command.

9. The system of claim 7, further comprising means for reversing the polarity of said difference and the direction of increasing and/or decreasing of said output angular frequency according to the polarity of the dc axis current.

10. A method of driving a synchronous motor (7) comprising a step of vector-operating voltage commands (Vdc*, Vqc*) from given current commands (Idc*, Iqc*) and current detected values, a step of calculating an output angular frequency ($\omega$1) of an alternating current to be output by a power converter (6), a step of calculating estimated polar phase ($\theta$dc) from said output angular frequency ($\omega$1), a step of calculating 3-phase voltage commands (Vu*, Vv*, Vw*) to be output by said power converter (6) from this estimated polar phase ($\theta$dc) and said voltage commands (Vdc*, Vqc*), a step of PWM-controlling said power converter (6) by these 3-phase A.C. voltage commands (Vu*, Vv*, Vw*), and a step of supplying the PWM-controlled alternating current from said power converter (6) to said synchronous motor (7), wherein said synchronous motor (7) driving method further comprises,
a step of calculating an arbitrary first value (Q) from an input signal (Vdc*, Vqc*) that is obtained from a control system calculating said 3-phase A.C. voltage commands (Vu*, Vv*, Vw*) and an output signal (Idc, Iqc) that is obtained from a result of power-feeding from said power converter (6) to said motor (7),
a step of calculating an arbitrary second value (Qhat) from said output angular frequency ($\omega$1) and said output signal (Idc, Iqc),
a step of calculating a position error function value ($\Delta$Q2) which is a function of position error ($\Delta\theta$) of said synchronous motor (7) from said first (Q) and second (Qhat) values without a winding resistance of the synchronous motor (7), and
a step of controlling said output angular frequency ($\omega$1) to minimize this position error function value ($\Delta$Q2).

11. The method of claim 10, wherein said input signal contains a signal equivalent to said voltage commands (Vdc*, Vqc*) or said output angular frequency ($\omega$1) and said output signal contains a signal equivalent to current detected values (Idc, Iqc).

12. The method of claim 10, wherein said first (Q) and second (Qhat) values respectively represent the detected value (Q) and the estimated value (Qhat) of the instantaneous reactive power.

13. The method claim 10, wherein said position error function value ($\Delta$Q2) contains proportional and differential terms of the position error ($\Delta\theta$).

14. The method of claim 10, wherein said step of calculating an arbitrary first value (Q) or said step of calculating an arbitrary second value (Qhat) includes a step of calculating a 3-value product of $K_E$ by $\omega$1 by Idc where $\omega$1 is the output angular frequency, $K_E$ is a control parameter of the induced voltage constant of said motor, and Idc is the dc position error of the current detected value.

15. The method of claim 10, further comprising a step of setting an exciting current command to a positive preset value when said motor (7) is power-running by a positive torque current command and a step of setting an exciting current command to a negative preset value when said motor (7) is regenerating by a negative torque current command.

16. The method of claim 10, further comprising a step of reversing (12) the polarity of said position error function value ($\Delta$Q2) and a step of reversing the direction of increasing and/or decreasing of said output angular frequency ($\omega$1) according to the polarity of the dc axis current.

**Patentansprüche**

1. System zum Antrieb eines Synchronmotors, das umfasst:

einen Synchronmotor (7), einen Leistungs-Stromrichter (6) zur Lieferung eines beliebigen Wechselstroms an diesen Motor (7), eine Berechnungseinrichtung (3) für Spannungsbefehle zur Erzeugung vektorieller Spannungsbefehle (Vdc*, Vqc*) aus gegebenen Strombefehlen (Id*, Iq*) und erfassten Stromwerten (Idc, Iq), eine Frequenzberechnungseinrichtung (14) zur Berechnung der Ausgangs-Winkelfrequenz ($\omega$1) eines Wechsel-

stroms, der durch den Leistungs-Stromrichter (6) auszugeben ist, eine Einrichtung (15) zur Berechnung einer geschätzten polaren Phase ($\theta$dc) aus der Ausgangs-Winkelfrequenz ($\omega$1), eine Berechnungseinrichtung (4) für Dreiphasenwechselstrom-Spannungsbefehle zur Berechnung von durch den Leistungs-Stromrichter (6) auszugebenden Dreiphasenwechselstrom-Spannungsbefehlen (Vu*, Vv*, Vw*) aus dieser geschätzten polaren Phase ($\theta$dc) und den Spannungsbefehlen (Vdc*, Vqc*) und eine PWM-Steuereinrichtung (5) zur PWM-Steuerung des Leistungs-Stromrichters (6) durch diese Dreiphasenwechselstrom-Spannungsbefehle (Vu*, Vv*, Vw*), wobei das System zum Antrieb eines Synchronmotors ferner aufweist:

eine erste Berechnungseinrichtung (9) zur Berechnung eines beliebigen ersten Wertes (Q) aus einem Eingangssignal (Vdc*, Vqc*), das von einem Steuersystem erhalten ist, das die Berechnungseinrichtung (4) für Dreiphasenwechselstrom-Spannungsbefehle umfasst, und einem Ausgangssignal (Idc, Iqc), das aus einem Ergebnis der Zufuhr von Leistung von dem Leistungs-Stromrichter (6) zum Motor (7) erhalten ist, eine zweite Berechnungseinrichtung (10) zur Berechnung eines beliebigen zweiten Wertes (Qhat) aus der Ausgangs-Winkelfrequenz ($\omega$1) und dem Ausgangssignal
und
eine Frequenzsteuereinrichtung (11, 12, 13) zur Berechnung eines Wertes ($\triangle$Q2) der Positionsfehler-Funktion, der eine Funktion des Positionsfehlers ($\triangle\theta$) des Synchronmotors (7) ist, aus dem ersten Wert (Q) und dem zweiten Wert (Qhat) ohne einen Wicklungswiderstand des Synchronmotors (7) und Steuern der Ausgangs-Winkelfrequenz ($\omega$1) so, dass dieser Wert ($\triangle$Q2) der Positionsfehler-Funktion minimiert wird.

2. System nach Anspruch 1, bei dem das Eingangssignal ein Signal enthält, das den Spannungsbefehlen oder der Ausgangs-Winkelfrequenz ($\omega$1) äquivalent ist, und das Ausgangssignal ein Signal enthält, das den erfassten Stromwerten äquivalent ist.

3. System nach Anspruch 1, bei dem die erste Berechnungseinrichtung und/oder die zweite Berechnungseinrichtung eine Einrichtung zur Berechnung eines Produkts aus drei Werten, $K_E \cdot \omega1 \cdot Idc$, enthalten, worin $\omega1$ die Ausgangs-Winkelfrequenz, $K_E$ einen Steuerparameter der Konstante der induzierten Spannung des Motors und Idc den dc-Positionsfehler des erfassten Stromwertes bedeuten.

4. System nach Anspruch 1, bei dem der erste Wert und der zweite Wert den erfassten Wert (Q) beziehungsweise den Schätzwert (Qhat) der momentanen Blindleistung darstellen.

5. System nach Anspruch 1, bei dem die Positionsfehler-Funktion proportionale und differentielle Terme des Positionsfehlers ($\triangle\theta$) enthält.

6. System nach Anspruch 1, das ferner eine Einrichtung zur Umkehrung der Polarität des Wertes der Positionsfehler-Funktion und der Richtung der Zunahme und/oder der Abnahme der Ausgangs-Winkelfrequenz entsprechend der Polarität des dc-Achsen-Stroms aufweist.

7. System nach Anspruch 1, bei dem
die erste Berechnungseinrichtung eine Blindleistungs-Erfassungseinrichtung (9) zur Erfassung des Wertes (Q) der erfassten momentanen Blindleistung durch Eingabe der Spannungsbefehle und der erfassten Stromwerte darstellt, die zweite Berechnungseinrichtung eine Schätzeinrichtung (10) für momentane Blindleistung zur Schätzung des Schätzwertes (Qhat) der momentanen Blindleistung durch Eingabe der Ausgangs-Winkelfrequenz ($\omega$1) und der erfassten Stromwerte darstellt
und
die Frequenzsteuereinrichtung (11 - 13) so ausgebildet ist, dass sie die Ausgangs-Winkelfrequenz ($\omega$1) so steuert, dass die Differenz zwischen dem Schätzwert (Qhat) der momentanen Blindleistung und dem erfassten Wert (Q) der momentanen Blindleistung minimiert wird.

8. System nach Anspruch 7, das ferner eine Einrichtung aufweist zur Festsetzung eines Erregungsstrom-Befehls auf einen positiven vorbestimmten Wert, wenn der Motor durch einen Strombefehl für positives Drehmoment unter Leistung läuft, und zur Festsetzung eines Erregungsstrom-Befehls auf einen negativen vorbestimmten Wert, wenn der Motor durch einen Strombefehl für negatives Drehmoment regeneriert wird.

9. System nach Anspruch 7, das ferner eine Einrichtung zur Umkehrung der Polarität der genannten Differenz und der Richtung der Zunahme und/oder der Abnahme der Ausgangs-Winkelfrequenz entsprechend der Polarität des dc-Achsen-Stroms aufweist.

**10.** Verfahren zum Antrieb eines Synchronmotors (7), das folgende Schritte umfasst:

einen Schritt der Erzeugung vektorieller Spannungsbefehle (Vdc*, Vqc*) aus gegebenen Strombefehlen (Idc*, Iqc*) und erfassten Stromwerten,
einen Schritt der Berechnung einer Ausgangs-Winkelfrequenz (ω1) eines Wechselstroms, der durch einen Leistungs-Stromrichter (6) auszugeben ist,
einen Schritt der Berechnung einer geschätzten polaren Phase (θdc) aus der Ausgangs-Winkelfrequenz (ω1),
einen Schritt der Berechnung von durch den Leistungs-Stromrichter (6) auszugebenden Dreiphasenwechselstrom-Spannungsbefehlen (Vu*, Vv*, Vw*) aus dieser geschätzten polaren Phase (θdc) und den Spannungsbefehlen (Vdc*, Vqc*),
einen Schritt der PWM-Steuerung des Leistungs-Stromrichters (6) durch diese Dreiphasenwechselstrom-Spannungsbefehle (Vu*, Vv*, Vw*)
und
einen Schritt der Lieferung des PWM-gesteuerten Wechselstroms von dem Leistungs-Stromrichter (6) an den Synchronmotor (7),
wobei das Verfahren zum Antrieb eines Synchronmotors (7) ferner umfasst:

einen Schritt der Berechnung eines beliebigen ersten Wertes (Q) aus einem Eingangssignal (Vdc*, Vqc*), das von einem Steuersystem erhalten ist, das die Dreiphasenwechselstrom-Spannungsbefehle (Vu*, Vv*, Vw*) berechnet, und einem Ausgangssignal (Idc, Iqc), das aus einem Ergebnis der Zufuhr von Leistung von dem Leistungs-Stromrichter (6) zum Motor (7) erhalten ist,
einen Schritt der Berechnung eines beliebigen zweiten Wertes (Qhat) aus der Ausgangs-Winkelfrequenz (ω1) und dem Ausgangssignal (Idc, Iqc),
einen Schritt der Berechnung eines Wertes (ΔQ2) der Positionsfehler-Funktion, der eine Funktion des Positionsfehlers (Δθ) des Synchronmotors (7) ist, aus dem ersten Wert (Q) und dem zweiten Wert (Qhat) ohne einen Wicklungswiderstand des Synchronmotors (7)
und
einen Schritt der Steuerung der Ausgangs-Winkelfrequenz (ω1) so, dass dieser Wert (ΔQ2) der Positionsfehler-Funktion minimiert wird.

**11.** Verfahren nach Anspruch 10, bei dem das Eingangssignal ein Signal enthält, das den Spannungsbefehlen (Vdc*, Vqc*) oder der Ausgangs-Winkelfrequenz (ω1) äquivalent ist, und das Ausgangssignal ein Signal enthält, das den erfassten Stromwerten (Idc, Iqc) äquivalent ist.

**12.** Verfahren nach Anspruch 10, bei dem der erste Wert (Q) und der zweite Wert (Qhat) den erfassten Wert (Q) beziehungsweise den Schätzwert (Qhat) der momentanen Blindleistung darstellen.

**13.** Verfahren nach Anspruch 10, bei dem der Wert (ΔQ2) der Positionsfehler-Funktion proportionale und differentielle Terme des Positionsfehlers (Δθ) enthält.

**14.** Verfahren nach Anspruch 10, bei dem der Schritt der Berechnung eines beliebigen ersten Wertes (Q) oder der Schritt der Berechnung eines beliebigen zweiten Wertes (Qhat) einen Schritt der Berechnung eines Produkts aus drei Werten, $K_E \cdot \omega1 \cdot Idc$, beinhaltet, worin ω1 die Ausgangs-Winkelfrequenz, $K_E$ einen Steuerparameter der Konstante der induzierten Spannung des Motors und Idc den dc-Positionsfehler des erfassten Stromwertes bedeuten.

**15.** Verfahren nach Anspruch 10, das ferner umfasst:

einen Schritt der Festsetzung eines Erregungsstrom-Befehls auf einen positiven vorbestimmten Wert, wenn der Motor (7) durch einen Strombefehl für positives Drehmoment unter Leistung läuft, und
einen Schritt der Festsetzung eines Erregungsstrom-Befehls auf einen negativen vorbestimmten Wert, wenn der Motor (7) durch einen Strombefehl für negatives Drehmoment regeneriert wird.

**16.** Verfahren nach Anspruch 10, das ferner einen Schritt der Umkehrung (12) der Polarität des Wertes (ΔQ2) der Positionsfehler-Funktion und einen Schritt der Umkehrung der Richtung der Zunahme und/oder der Abnahme der Ausgangs-Winkelfrequenz (ω1) entsprechend der Polarität des dc-Achsen-Stroms umfasst.

**Revendications**

1. Système d'entraînement de moteur synchrone comprenant :

   un moteur synchrone (7), un convertisseur de puissance (6) pour délivrer un courant alternatif arbitraire à ce moteur (7), un moyen de calcul de commandes de tension (3) pour opérer de manière vectorielle des commandes de tension (Vdc*, Vqc*) à partir de commandes de courant (Id*, Iq*) données et de valeurs détectées de courant (Idc, Iqc), un moyen (14) de calcul de fréquence pour calculer une fréquence angulaire de sortie (ω1) d'un courant alternatif devant être délivré en sortie par ledit convertisseur de puissance (6), un moyen (15) pour calculer une phase polaire estimée (θdc) à partir de ladite fréquence angulaire de sortie (ω1), un moyen (4) de calcul de commandes de tension de CA triphasé pour calculer des commandes de tension de CA triphasé (Vu*, Vv*, Vw*) devant être délivrées en sortie par ledit convertisseur de puissance (6) à partir de cette phase polaire estimée (θdc) et desdites commandes de tension (Vdc*, Vqc*), et un moyen (5) de contrôle PWM pour contrôler par PWM ledit convertisseur de puissance (6) par ces commandes de tension de CA triphasé (Vu*, Vv*, Vw*), dans lequel ledit système d'entraînement de moteur synchrone comprend en outre :

   un premier moyen (9) de calcul pour calculer une première valeur (Q) arbitraire à partir d'un signal d'entrée (Vdc*, Vqc*) qui est obtenu d'un système de contrôle incluant ledit moyen (4) de calcul de commandes de tension de CA triphasé et d'un signal de sortie (Idc, Iqc) qui est obtenu d'un résultat d'alimentation de puissance dudit convertisseur de puissance (6) audit moteur (7),
   un deuxième moyen (10) de calcul pour calculer une deuxième valeur (Qhat) arbitraire à partir de ladite fréquence angulaire de sortie (ω1) et dudit signal de sortie, et
   un moyen (11, 12, 13) de contrôle de fréquence pour calculer une valeur (ΔQ2) de fonction d'erreur de position qui est une fonction d'une erreur de position (Δθ) dudit moteur synchrone (7) à partir desdites première (Q) et deuxième (Qhat) valeurs sans une résistance d'enroulement dudit moteur synchrone (7) et contrôler ladite fréquence angulaire de sortie (ω1) de façon à minimiser cette valeur (ΔQ2) de fonction d'erreur de position.

2. Système selon la revendication 1, dans lequel ledit signal d'entrée contient un signal équivalent auxdites commandes de tension ou à ladite fréquence angulaire de sortie (ω1), et ledit signal de sortie contient un signal équivalent auxdites valeurs détectées de courant.

3. Système selon la revendication 1, dans lequel ledit/lesdits premier et/ou deuxième moyen(s) de calcul contiennent/ contient un moyen pour calculer un produit à 3 valeurs de $K_E$ par ω1 par Idc où ω1 est la fréquence angulaire de sortie, $K_E$ est un paramètre de contrôle de la constante de tension induite dudit moteur, et Idc est l'erreur de position dc de la valeur détectée de courant.

4. Système selon la revendication 1, dans lequel lesdites première et deuxième valeurs représentent respectivement la valeur détectée (Q) et la valeur estimée (Qhat) de la puissance réactive instantanée.

5. Système selon la revendication 1, dans lequel ladite fonction d'erreur de position contient des termes proportionnels et différentiels d'erreur de position (Δθ).

6. Système selon la revendication 1, comprenant en outre un moyen pour inverser la polarité de ladite valeur de fonction d'erreur de position et le sens d'augmentation et/ou de diminution de ladite fréquence angulaire de sortie en fonction de la polarité du courant d'axe dc.

7. Système selon la revendication 1, dans lequel le premier moyen de calcul représente un moyen (9) de détection de puissance réactive pour détecter une valeur (Q) détectée de puissance réactive instantanée en entrant lesdites commandes de tension et valeurs détectées de courant,
   le deuxième moyen de calcul représente un moyen (10) d'estimation de puissance réactive instantanée pour estimer une valeur (Qhat) estimée de puissance réactive instantanée en entrant ladite fréquence angulaire de sortie (ω1) et lesdites valeurs détectées de courant, et
   le moyen (11-13) de contrôle de fréquence est adapté à contrôler ladite fréquence angulaire de sortie (ω1) de façon à minimiser la différence entre la valeur (Qhat) estimée de puissance réactive instantanée et la valeur (Q) détectée de puissance réactive instantanée.

8. Système selon la revendication 7, comprenant en outre un moyen pour fixer une commande de courant d'excitation à une valeur prédéfinie positive lorsque ledit moteur est en cours de fonctionnement par une commande positive de courant de couple et fixer une commande de courant d'excitation à une valeur prédéfinie négative lorsque ledit moteur est en cours de régénération par une commande négative de courant de couple.

9. Système selon la revendication 7, comprenant en outre un moyen pour inverser la polarité de ladite différence et le sens d'augmentation et/ou de diminution de ladite fréquence angulaire de sortie en fonction de la polarité du courant d'axe dc.

10. Procédé d'entraînement d'un moteur synchrone (7) comprenant une étape d'opération de manière vectorielle de commandes de tension (Vdc*, Vqc*) à partir de commandes de courant (Idc*, Iqc*) données et de valeurs détectées de courant, une étape de calcul d'une fréquence angulaire de sortie ($\omega$1) d'un courant alternatif devant être délivré en sortie par un convertisseur de puissance (6), une étape de calcul d'une phase polaire estimée ($\theta$dc) à partir de ladite fréquence angulaire de sortie ($\omega$1), une étape de calcul de commandes de tension de CA triphasé (Vu*, Vv*, Vw*) devant être délivrées en sortie par ledit convertisseur de puissance (6) à partir de cette phase polaire estimée ($\theta$dc) et desdites commandes de tension (Vdc*, Vqc*), une étape de contrôle PWM dudit convertisseur de puissance (6) par ces commandes de tension de CA triphasé (Vu*, Vv*, Vw*), et une étape de délivrance du courant alternatif contrôlé par PWM provenant dudit convertisseur de puissance (6) audit moteur synchrone (7), dans lequel ledit procédé d'entraînement de moteur synchrone (7) comprend en outre
une étape de calcul d'une première valeur (Q) arbitraire à partir d'un signal d'entrée (Vdc*, Vqc*) qui est obtenu d'un système de contrôle calculant lesdites commandes de tension de CA triphasé (Vu*, Vv*, Vw*) et d'un signal de sortie (Idc, Iqc) qui est obtenu d'un résultat d'alimentation de puissance dudit convertisseur de puissance (6) audit moteur (7),
une étape de calcul d'une deuxième valeur (Qhat) arbitraire à partir de ladite fréquence angulaire de sortie ($\omega$1) et dudit signal de sortie (Idc, Iqc),
une étape de calcul d'une valeur ($\Delta$Q2) de fonction d'erreur de position qui est une fonction d'erreur de position ($\Delta\theta$) dudit moteur synchrone (7) à partir desdites première (Q) et deuxième (Qhat) valeurs sans une résistance d'enroulement dudit moteur synchrone (7), et
une étape de contrôle de ladite fréquence angulaire de sortie ($\omega$1) de façon à minimiser cette valeur ($\Delta$Q2) de fonction d'erreur de position.

11. Procédé selon la revendication 10, dans lequel ledit signal d'entrée contient un signal équivalent auxdites commandes de tension (Vdc*, Vqc*) ou à ladite fréquence angulaire de sortie ($\omega$1), et ledit signal de sortie contient un signal équivalent auxdites valeurs (Idc, Iqc) détectées de courant.

12. Procédé selon la revendication 10, dans lequel lesdites première (Q) et deuxième (Qhat) valeurs représentent respectivement la valeur détectée (Q) et la valeur estimée (Qhat) de la puissance réactive instantanée.

13. Procédé selon la revendication 10, dans lequel ladite valeur ($\Delta$Q2) de fonction d'erreur de position contient des termes proportionnels et différentiels de l'erreur de position ($\Delta\theta$).

14. Procédé selon la revendication 10, dans lequel ladite étape de calcul d'une première valeur (Q) arbitraire ou ladite étape de calcul d'une deuxième valeur (Qhat) arbitraire inclut une étape de calcul d'un produit à 3 valeurs de $K_E$ par $\omega$1 par Idc où $\omega$1 est la fréquence angulaire de sortie, $K_E$ est un paramètre de contrôle de la constante de tension induite dudit moteur, et Idc est l'erreur de position dc de la valeur détectée de courant.

15. Procédé selon la revendication 10, comprenant en outre une étape de fixation d'une commande de courant d'excitation à une valeur prédéfinie positive lorsque ledit moteur (7) est en cours de fonctionnement par une commande positive de courant de couple et une étape de fixation d'une commande de courant d'excitation à une valeur prédéfinie négative lorsque ledit moteur (7) est en cours de régénération par une commande négative de courant de couple.

16. Procédé selon la revendication 10, comprenant en outre une étape d'inversion (12) de la polarité de ladite valeur ($\Delta$Q2) de fonction d'erreur de position et une étape d'inversion du sens d'augmentation et/ ou de diminution de ladite fréquence angulaire de sortie ($\omega$1) en fonction de la polarité du courant d'axe dc.

# FIG. 1

## FIG. 2

## FIG. 3

# FIG. 4

POSITION ERROR
$\Delta \theta < 0$

U-PHASE WINDING
AXIS OF STATOR

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003199388 B
- JP 2000324878 A
- JP HEI07199575398 B
- JP 2000023498 A
- JP 2004289959 A